# FASCICULE DE BREVET EUROPEEN

(11) **EP 3 354 927 B1**
(45) Date de publication et mention de la délivrance du brevet: **18.12.2019**
(21) Numéro de dépôt: 18154020.4
(22) Date de dépôt: 30.01.2018
(51) Int. Cl.: F16F 1/02, B65D 85/04, B65D 85/08, F16F 1/12, B65D 59/04

(54) **GAINE DE PROTECTION D'UN RESSORT DE FORMAT PREDETERMINE**
SCHUTZHÜLLE EINER FEDER MIT VORBESTIMMTEM FORMAT
PROTECTIVE SHEATH FOR A SPRING WITH PREDETERMINED FORMAT

(30) Priorité: 31.01.2017 FR 1750804
(43) Date de publication de la demande: 01.08.2018
(73) Titulaire: Huon, Serge Michel, 78600 Maisons Laffitte (FR)
(72) Inventeur: Huon, Serge Michel, 78600 Maisons Laffitte (FR)
(74) Mandataire: Santarelli

(56) Documents cités:
- EP-A1- 1 531 128
- EP-A1- 1 680 257
- DE-A1- 19 937 488
- FR-A1- 2 388 722
- US-A- 1 745 341

## Description

La présente demande concerne une gaine de protection de ressort.

Elle concerne en particulier une gaine de protection pour un ressort d'un format prédéterminé.

Le « format » désigne ici un diamètre et une longueur du ressort.

Il s'agit notamment de ressort de type hélicoïdal formé d'un fil métallique très fin, c'est-à-dire dont le diamètre est inférieur au demi millimètre, par exemple de l'ordre de quelques dixièmes de millimètres.

De tels ressorts sont ainsi très fragiles et s'emmêlent très facilement.

En effet, lorsque de tels ressorts sont produits en grandes quantités, c'est-à-dire en plusieurs centaines, voire milliers, voire millions, d'exemplaires par an, ces ressorts ont tendance à s'enchevêtrer, formant alors des paquets indémêlables. Les ressorts ne sont alors plus exploitables et/ou cassent.

Il s'est donc avéré intéressant de pouvoir les contenir individuellement.

Au moins un des objectifs de la présente demande est ainsi de résoudre, au moins en partie, les inconvénients précités, en menant en outre à d'autres avantages.

A cet effet, est proposé, selon un premier aspect, une gaine de protection d'un ressort de format prédéterminé, la gaine comportant un corps s'étendant entre une première extrémité et une seconde extrémité et définissant un logement cylindrique pour un ressort du format prédéterminé, le logement ayant un diamètre (D) supérieur à un diamètre du ressort et une longueur (L) supérieure à une longueur du ressort,
- la première extrémité étant obturée au moins en partie par une portion transversale formant une butée axiale pour un ressort du format prédéterminé logé dans le logement, et
- à la seconde extrémité :
   ∘ le corps comportant une ouverture pour insérer un ressort du format prédéterminé dans le logement ou l'en extraire, et
   ∘ la gaine comportant au moins un bras, mobile entre une position stable, dans laquelle il est en travers de l'ouverture et forme une butée axiale pour un ressort du format prédéterminé logé dans le logement, et une position instable, dans laquelle il est écarté et l'ouverture dégagée.

Dans une telle gaine, le corps comporte un logement, cylindrique, dont le diamètre est au moins égal au diamètre du ressort avec un jeu et dont la longueur est au moins égale à la longueur du ressort avec un jeu.

Il est alors possible d'éviter toute compression du ressort. Le ressort est ainsi au repos dans le logement.

Ainsi, dans le cas de ressorts très fins et fragiles, ils sont alors mieux protégés et il y a moins de risques de les déformer. Le document FR 2 388 722 A1 montre une gaine de protection et est considéré comme l'état de la technique le plus proche.

En outre, grâce aux jeux, le ressort étant libre dans le logement, il est possible de nettoyer et sécher le ressort contenu dans la gaine : il n'y a pas de zone inaccessible, par exemple formée par une zone de contact, comme lorsqu'un ressort est coincé dans une gaine ou autre dispositif de maintien.

De plus, le ressort peut ainsi être introduit dans le logement ou en être extrait simplement par gravité par exemple.

Dans un exemple de réalisation intéressant, le bras s'étend au-delà de l'ouverture.

Par exemple, le bras est mobile par rapport au logement.

Et par exemple, le bras est mobile selon une direction dans un plan transversal à un axe du logement - axe selon lequel le logement a une longueur (L).

Par exemple, une racine du bras par laquelle il est relié au corps se trouve hors de l'ouverture.

Il est ainsi particulièrement aisé de bouger le bras, notamment de l'écarter par rapport à l'ouverture.

Par exemple, une extrémité du bras opposée à sa racine se trouve hors de l'ouverture.

De même, il est alors particulièrement facile d'agir sur le bras pour l'écarter.

Dans un exemple de réalisation particulièrement intéressant, la gaine est réalisée en un matériau plastique, ou métallique, comme par exemple en acier ou aluminium, et/ou dans un même matériau que celui utilisé pour réaliser le ressort à contenir.

Une telle gaine en matériau métallique peut ainsi être utilisée de très nombreuses fois en limitant son éventuelle usure.

Ceci permet aussi un nettoyage et une passivation facile de la gaine.

Par exemple, il est ainsi possible d'éviter que la gaine flotte dans un bain de nettoyage. Si elle est en plastique, elle peut par exemple comporter une masselotte.

Une telle gaine présente aussi ainsi une sensibilité réduite aux variations éventuelles de température : par exemple, son coefficient de dilatation thermique est alors très faible ce qui permet de conserver ses dimensions, en particulier celles du logement, sur une plage importante de température et ainsi minimiser les risques d'écrasement ou compression du ressort contenu lorsque les jeux entre le logement et le ressort sont réduits, en cas de réduction de température ambiante. Une telle situation est notamment intéressante lorsque des gaines comportant un ressort sont transportées car les camions de transport utilisés sont souvent réfrigérés.

Dans un exemple de réalisation très intéressant, la gaine comporte une portion à la seconde extrémité qui est repliée en deux boucles décalées angulairement l'une par rapport à l'autre, l'une des boucles qui est décalée comportant le bras mobile.

La présence de deux boucles permet de mieux éviter que plusieurs gaines ne s'emmêlent elles-mêmes les unes avec les autres.

En outre, elles permettent une application très facile d'un effort pour ouvrir la seconde extrémité pour pouvoir insérer ou extraire un ressort considéré.

Le décalage angulaire entre les deux boucles est par exemple représenté par un angle de débattement « a » qui est par exemple égal ou inférieur à environ 45°, par exemple compris entre environ 1° et environ 45°, voire entre environ 1° et environ 30°.

Par exemple, la portion repliée à la seconde extrémité comporte une spire qui relie les deux boucles l'une à l'autre.

Dans un exemple de réalisation particulièrement commode, le corps de la gaine est formé par un ressort à spires jointives.

Par exemple, les extrémités diffèrent alors d'un ressort hélicoïdal classique.

Par exemple, la gaine est formée d'un seul fil qui comporte une partie enroulée en spires jointives formant le corps de la gaine, une portion à la première extrémité qui barre au moins en partie une section transversale à la première extrémité du corps, formant ainsi la butée axiale à la première extrémité, et une portion à la seconde extrémité qui est repliée et comporte le bras mobile.

Par exemple, la portion de fil à la seconde extrémité est repliée en deux boucles décalées angulairement l'une par rapport à l'autre. Par exemple, l'une des boucles comporte un tronçon formant le bras mobile.

Le fil est par exemple métallique.

En particulier, le fil est possiblement du même matériau que le ressort du format prédéterminé que la gaine est destinée à contenir.

Ceci permet ainsi le nettoyage et la passivation facile d'une telle gaine.

Dans un exemple de réalisation, le fil comporte une section ronde, à l'instar d'un ressort hélicoïdal standard.

Dans un autre exemple de réalisation, le fil comporte une section carrée, ce qui procure l'avantage que le logement puisse présenter une paroi lisse minimisant des risques d'accrochage du ressort à contenir.

Dans un autre exemple de réalisation, la gaine est réalisée à partir d'un feuillard.

Il s'agit par exemple d'une feuille, par exemple métallique, au moins fendue par deux fentes parallèles s'étendant parallèlement à un bord sur une partie d'une dimension de la feuille selon ce bord, scindant ainsi la feuille en trois parties : une partie supérieure, une partie centrale entre les deux fentes et une partie inférieure.

Par exemple, la partie centrale est enroulée sur elle-même formant un tube dont un axe est alors transversal au bord, formant ainsi le corps de la gaine.

En outre, l'une de la partie supérieure ou de la partie inférieure est repliée en travers d'une section d'une première extrémité du tube - la section du tube étant elle-même transversale à l'axe - de sorte à former la butée axiale à la première extrémité du corps.

En outre, une autre de la partie supérieure ou de la partie inférieure est repliée, par exemple en boucles, aussi en travers d'une section d'une seconde extrémité du tube - la section étant aussi elle-même transversale à l'axe - de sorte à former le bras mobile de la seconde extrémité du corps.

L'invention, selon un exemple de réalisation, sera bien comprise et ses avantages apparaitront mieux à la lecture de la description détaillée qui suit, donnée à titre indicatif et nullement limitatif, en référence aux dessins annexés dans lesquels :
La figure 1 montre en perspective d'une gaine selon un premier exemple de réalisation, à partir d'une seconde extrémité comportant un bras mobile en position stable,
La figure 2 montre selon la même perspective la gaine de la figure 1 avec le bras mobile en position instable,
La figure 3 montre en perspective la gaine des figures 1 et 2, à partir d'une première extrémité comportant une butée axiale,
Les figures 4 et 5 montrent, en perspective et vue de dessous, une gaine selon un deuxième exemple de réalisation, et
La figure 6 montre, en perspective, une gaine selon un troisième exemple de réalisation.

Les éléments identiques représentés sur les figures précitées sont identifiés par des références numériques identiques.

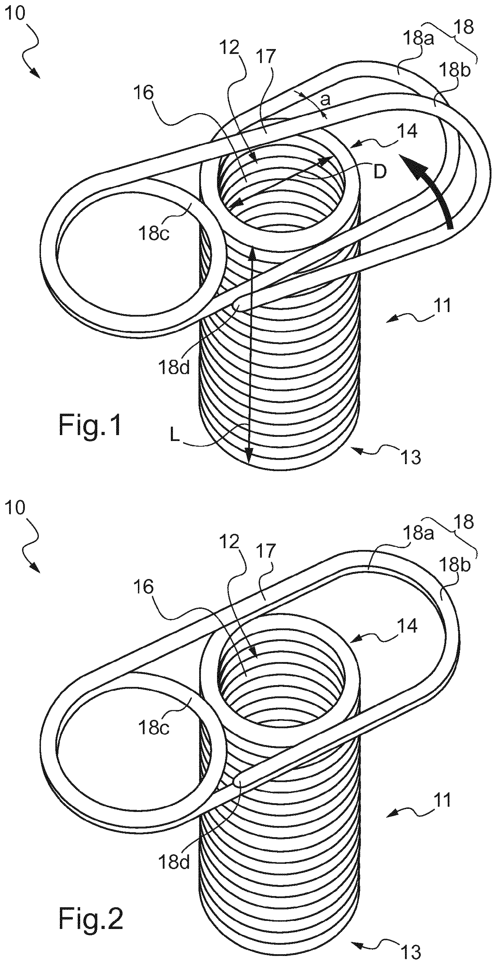

Les figures 1 à 3 représentent une gaine 10 de protection d'un ressort de format prédéterminé selon un premier exemple de réalisation de la présente invention.

La gaine 10 comporte principalement un corps 11.

Le corps 11 a une forme globalement cylindrique à section circulaire. Il s'étend entre une première extrémité 13 et une seconde extrémité 14.

Le corps 11 définit intérieurement un logement 12.

Le logement 12 est cylindrique à section circulaire et est configuré pour recevoir un ressort (non représenté) de format prédéterminé, c'est-à-dire de diamètre et de longueur connus préalablement, en particulier un ressort de type hélicoïdal formé d'un fil, lequel est généralement métallique, très fin, c'est-à-dire un fil dont le diamètre est inférieur au demi millimètre, par exemple de l'ordre de quelques dixièmes de millimètres, voire moins.

Le logement 12 présente un diamètre D supérieur à un diamètre du ressort, c'est-à-dire au moins égal au diamètre du ressort qu'il est configuré pour recevoir agrémenté d'un jeu latéral, et une longueur L supérieure à une longueur du ressort, c'est-à-dire au moins égale à une longueur du ressort qu'il est configuré pour recevoir agrémentée d'un jeu axial.

Ainsi, lorsqu'un ressort du format prédéterminé est logé dans le logement, celui-ci y est libre : il n'y est pas contraint ou comprimé, le ressort peut ainsi être en position de repos dans le logement.

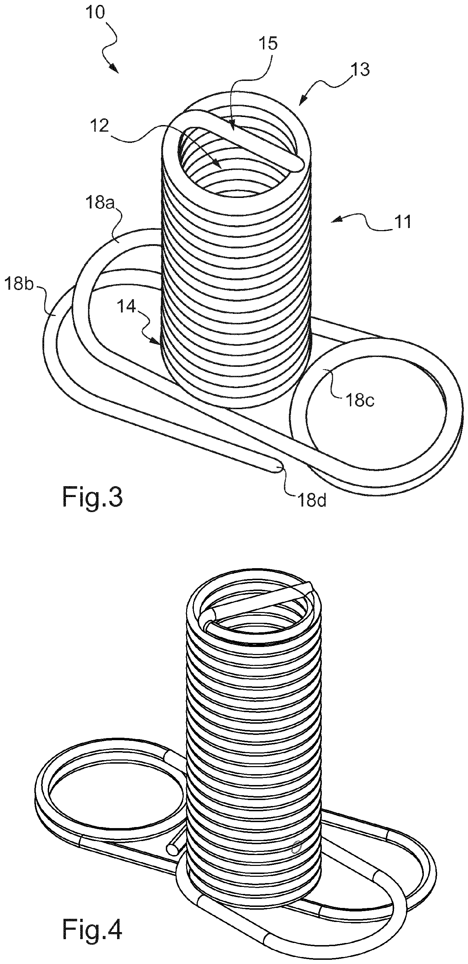

Du côté de la première extrémité 13, visible figure 3, la gaine comporte une portion transversale 15, par exemple ici en forme de doigt, qui barre au moins une partie d'une section transversale du logement 12 du corps à la première extrémité 13.

La portion transversale 15 est ainsi configurée pour former une butée axiale pour un ressort du format prédéterminé qui serait logé dans le logement.

De préférence, comme dans le présent exemple de réalisation, cette portion transversale 15 est notamment configurée pour éviter qu'un ressort contenu dans le logement puisse sortir via la première extrémité 13.

Du côté de la seconde extrémité 14, visible figures 1 et 2, le logement 12 comporte une ouverture 16 configurée pour insérer un ressort du format prédéterminé dans le logement ou l'en extraire.

En outre, la gaine 10 comporte au moins un bras 17 qui est mobile entre une position stable (représentée figure 1), dans laquelle il est en travers de l'ouverture 16 et forme une butée axiale pour un ressort du format prédéterminé logé dans le logement 12, et une position instable (représentée figure 2), dans laquelle il est écarté et l'ouverture 16 dégagée de sorte qu'il est alors possible d'insérer un ressort dans le logement 12 ou de l'en extraire, par exemple simplement par gravité.

Comme l'illustrent les figures 1 et 2, dans le présent exemple de réalisation, la gaine comporte, à la seconde extrémité 14, une portion 18, sous forme d'un brin, qui est repliée en deux boucles 18a, 18b décalées angulairement l'une par rapport à l'autre, d'un angle de débattement « a », dans un état de repos de la portion 18.

Ici, on considère que la boucle 18a est fixe et reliée au corps 11 tandis que la boucle 18b est décalée, et mobile par rapport à la boucle 18a fixe, et comporte le bras 17, mobile. Dans le présent exemple, la boucle 18b mobile comporte ainsi une terminaison libre 18d qui forme également une terminaison libre de la portion 18 repliée.

La deux boucles 18a, 18b sont reliées entre elles par une spire 18c qui permet une articulation élastique des deux boucles entre elles.

Dans le présent exemple de réalisation, la terminaison libre 18d rejoint la spire 18c, ce qui permet de minimiser les risques que la terminaison libre 18d ne forme un point d'accroché qui entrainerait des enchevêtrements avec d'autres gaines.

Ainsi, au repos, les deux boucles sont décalées angulairement, comme le montre la figure 1, et le bras 17, alors porté par la boucle 18b mobile, est en travers d'une section du logement 12.

Lorsqu'un effort angulaire visant à réduire ce décalage angulaire, c'est-à-dire l'angle de débattement « a », est appliqué sur les boucles, c'est-à-dire un effort selon la flèche pleine représentée figure 1, les deux boucles tendent à se superposer, voire se superposent comme représenté sur la figure 2. Le cas échéant, le bras 17 est écarté et l'ouverture 16 est alors dégagée de sorte qu'il est possible d'introduire un ressort dudit format dans le logement ou l'en extraire.

On considère que la boucle 18b est mobile par rapport à la boucle 18a qui serait fixe, mais il s'agit bien entendu d'un mouvement relatif entre les deux boucles.

Selon une autre approche, il est possible de considérer que la portion 18 aurait ici par exemple une forme de trombone dont les deux boucles seraient sensiblement de même taille et décalée angulairement l'une par rapport à l'autre.

De manière générale, chaque boucle est dimensionnée de sorte que l'ouverture 16 est dégagée lorsque le bras 17 est écarté.

De même, le décalage angulaire, c'est-à-dire l'angle de débattement « a », peut être de tout angle tant que le bras 17 est en travers de l'ouverture 16 en position stable, de repos, et la dégage lorsqu'un effort est appliqué aux boucles, c'est-à-dire au plus quand les deux boucles sont superposées.

L'angle de débattement « a » formé entre les deux boucles est par exemple égale ou inférieur à environ 45°, par exemple compris entre environ 1° et environ 45°, voire entre environ 1° et environ 30°.

Dans l'exemple de réalisation particulier représenté ici, la gaine est formée d'un seul fil enroulé, à l'instar d'un ressort hélicoïdal dont les extrémités seraient différentes.

En effet, dans le cas présent, le fil comporte alors une partie enroulée en spires jointives formant le corps 11 de la gaine 10, une portion à la première extrémité qui forme la portion transversale 15 qui barre au moins en partie une section transversale à la première extrémité 13 du corps 11, formant ainsi la butée axiale à la première extrémité, et une portion à la seconde extrémité qui est repliée et comporte le bras 17 mobile.

De plus, le fil comporte ici une section ronde, à l'instar d'un ressort hélicoïdal classique.

La gaine est ainsi possiblement réalisée tout matériau, par exemple en un matériau plastique, ou métallique.

Dans un mode de réalisation privilégié, elle est réalisée dans un même matériau que celui utilisé pour réaliser le ressort à contenir ce qui facilite davantage son utilisation.

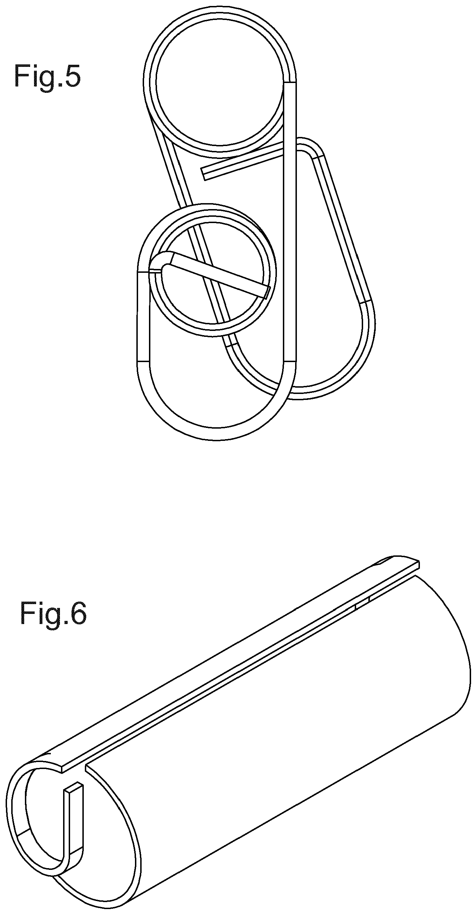

Les figures 4 et 5 illustrent un autre exemple de réalisation d'une gaine selon l'invention. Celui-ci diffère de l'exemple de réalisation des figures 1 à 3 principalement en ce que la terminaison libre des doubles boucles est davantage repliée vers l'intérieur des boucles.

Selon un autre exemple de réalisation illustré par la figure 6, la gaine de protection est possiblement réalisée à partir d'un feuillard dans lequel deux fentes auraient été découpées de sorte qu'une partie centrale entre les deux fentes est ensuite enroulée sur elle-même en tube formant le corps, et donc intérieurement le logement, une partie supérieure est repliée en travers d'une section d'une première extrémité du tube de sorte à former la butée axiale à la première extrémité du corps (par exemple visible en bas à gauche de la figure 6) et une partie inférieure est repliée, par exemple en boucles, en travers d'une section d'une seconde extrémité du tube de sorte à former le bras mobile de la seconde extrémité du corps.

Selon encore un autre exemple de réalisation non représenté, le bras est possiblement porté par une seule boucle articulée à la seconde extrémité du corps ou encore par une tige mobile montée à pivotement à la seconde extrémité du corps.

## Revendications

1. Gaine (10) de protection d'un ressort de format prédéterminé, la gaine (10) comportant un corps (11) s'étendant entre une première extrémité (13) et une seconde extrémité (14) et définissant un logement (12) cylindrique pour un ressort du format prédéterminé, le logement (12) ayant un diamètre (D) supérieur à un diamètre du ressort et une longueur (L) supérieure à une longueur du ressort,
- la première extrémité (13) étant obturée au moins en partie par une portion transversale (15) formant une butée axiale pour un ressort du format prédéterminé logé dans le logement (12), et
- à la seconde extrémité (14) :
∘ le corps (11) comportant une ouverture (16) pour insérer un ressort du format prédéterminé dans le logement (12) ou l'en extraire, et
∘ la gaine (10) comportant au moins un bras (17), mobile entre une position stable, dans laquelle il est en travers de l'ouverture (16) et forme une butée axiale pour un ressort du format prédéterminé logé dans le logement (12), et une position instable, dans laquelle il est écarté et l'ouverture (16) dégagée.

2. Gaine (10) selon la revendication 1, **caractérisée en ce qu'**une racine du bras (17) par laquelle il est relié au corps (11) se trouve hors de l'ouverture (16).

3. Gaine (10) selon l'une quelconque des revendications 1 ou 2, **caractérisée en ce qu'**une extrémité du bras (17) opposée à sa racine se trouve hors de l'ouverture (16).

4. Gaine (10) selon l'une quelconque des revendications 1 à 3, **caractérisée en ce qu'**elle est réalisée en un matériau plastique, ou métallique, et/ou dans un même matériau que celui utilisé pour réaliser le ressort à contenir.

5. Gaine (10) selon l'une quelconque des revendications 1 à 4, **caractérisée en ce qu'**elle comporte une portion (18) à la seconde extrémité (14) qui est repliée en deux boucles (18a, 18b) décalées angulairement l'une par rapport à l'autre, l'une des boucles (18b) qui est décalée comportant le bras (17) mobile.

6. Gaine (10) selon la revendication 5, **caractérisée en ce que** la portion (18) comporte une spire (18c) qui relie les deux boucles (18a, 18b) l'une à l'autre.

7. Gaine (10) selon l'une quelconque des revendications 1 à 6, **caractérisée en ce que** le corps (11) est formé par un ressort à spires jointives.

8. Gaine (10) selon l'une quelconque des revendications 1 à 7, **caractérisée en ce qu'**elle est formée d'un seul fil qui comporte une partie enroulée en spires jointives formant le corps (11) de la gaine (10), une portion à la première extrémité (13) qui barre au moins en partie une section transversale à la première extrémité du corps (11), formant ainsi la butée axiale à la première extrémité (13), et une portion à la seconde extrémité (14) qui est repliée et comporte le bras (17) mobile.

9. Gaine (10) selon la revendication 8, **caractérisée en ce que** le fil comporte une section ronde.

10. Gaine (10) selon l'une quelconque des revendications 1 à 6, **caractérisée en ce qu'**elle est réalisée à partir d'un feuillard.

## Patentansprüche

1. Schutzhülle (10) für eine Feder vorbestimmten Formats, wobei die Hülle (10) einen Körper (11) enthält, der sich zwischen einem ersten Ende (13) und einem zweiten Ende (14) erstreckt und eine zylindrische Aufnahme (12) für eine Feder vorbestimmten Formats definiert, wobei die Aufnahme (12) einen Durchmesser (D) größer als ein Durchmesser der Feder und eine Länge (L) größer als eine Länge der Feder aufweist,
- wobei das erste Ende (13) zumindest teilweise mit einem quer verlaufenden Abschnitt (15) verschlossen ist, der einen axialen Anschlag für eine in der Aufnahme (12) aufgenommene Feder vorbestimmten Formats bildet, und
- wobei an dem zweiten Ende (14)
• der Körper (11) eine Öffnung (16) aufweist, um eine Feder vorbestimmten Formats in die Aufnahme (12) einzuführen bzw. herauszunehmen, und
• die Hülle (10) zumindest einen Arm (17) enthält, der zwischen einer stabilen Position, in der er quer zur Öffnung (16) liegt und einen axialen Anschlag für eine in der Aufnahme (12) aufgenommene Feder vorbestimmten Formats bildet, und einer instabilen Position, in der er abgespreizt ist und die Öffnung (16) freigegeben ist, beweglich ist.

2. Hülle (10) nach Anspruch 1, **dadurch gekennzeichnet, dass** ein Ansatz des Armes (17), über den er mit dem Körper (11) verbunden ist, außerhalb der Öffnung (16) liegt.

3. Hülle (10) nach einem der Ansprüche 1 oder 2, **dadurch gekennzeichnet, dass** ein Ende des Arms (17), das seinem Ansatz entgegengesetzt ist, außerhalb der Öffnung (16) liegt.

4. Hülle (10) nach einem der Ansprüche 1 bis 3, **dadurch gekennzeichnet, dass** sie aus Kunststoff- oder Metallmaterial und/oder aus einem gleichen Material wie zum Herstellen der aufzunehmenden Feder verwendet hergestellt ist.

5. Hülle (10) nach einem der Ansprüche 1 bis 4, **dadurch gekennzeichnet, dass** sie an dem zweiten Ende (14) einen Abschnitt (18) enthält, der in zwei Schlaufen (18a, 18b) umgelegt ist, die winklig zueinander versetzt sind, wobei die eine Schlaufe (18b), die versetzt liegt, den beweglichen Arm (17) enthält.

6. Hülle (10) nach Anspruch 5, **dadurch gekennzeichnet, dass** der Abschnitt (18) eine Windung (18c) aufweist, die die beiden Schlaufen (18a, 18b) miteinander verbindet.

7. Hülle (10) nach einem der Ansprüche 1 bis 6, **dadurch gekennzeichnet, dass** der Körper (11) aus einer Feder mit aneinander liegenden Windungen gebildet ist.

8. Hülle (10) nach einem der Ansprüche 1 bis 7, **dadurch gekennzeichnet, dass** sie aus einem einzigen Draht gebildet ist, der einen Abschnitt aufweist, der zu aneinander liegenden Windungen (11) gewickelt ist, die den Körper (11) der Hülle (10) bilden, einen Abschnitt am ersten Ende (13), der zumindest teilweise einen Querschnitt am ersten Ende des Körpers (11) versperrt und dadurch den axialen Anschlag am ersten Ende (13) bildet, sowie einen Abschnitt am zweiten Ende (14), der umgebogen ist und den beweglichen Arm (17) enthält.

9. Hülle (10) nach Anspruch 8, **dadurch gekennzeichnet, dass** der Draht einen runden Querschnitt aufweist.

10. Hülle (10) nach einem der Ansprüche 1 bis 6, **dadurch gekennzeichnet, dass** sie ausgehend von einem Band hergestellt ist.

## Claims

1. A protective sheath (10) for a spring of predetermined format, the sheath (10) comprising a body (11) extending between a first end (13) and a second end (14) and defining a cylindrical housing (12) for a spring of the predetermined format, the housing (12) having a diameter (D) greater than a diameter of the spring and a length (L) greater than the length of the spring,
- the first end (13) being closed off at least in part by a transverse portion (15) forming an axial stop for a spring of the predetermined format housed in the housing (12), and
- at the second end (14):
∘ the body (11) comprising an opening (16) for inserting a spring of the predetermined format into the housing (12) or for extracting it therefrom, and
∘ the sheath (10) comprising at least one arm (17), movable between a stable position, in which it is across the opening (16) and forms an axial stop for a spring of the predetermined format housed in the housing (12), and an unstable position, in which it is moved away and the opening (16) cleared.

2. A sheath (10) according to claim 1, **characterized in that** a connecting portion of the arm (17) by which it is connected to the body (11) is located outside the opening (16).

3. A sheath (10) according to any one of claims 1 or 2, **characterized in that** an opposite end of the arm (17) to its connecting portion is located outside the opening (16).

4. A sheath (10) according to any one of claims 1 to 3, **characterized in that** it is formed from a plastic or metal material, and/or from the same material as that used to produce the spring to contain.

5. A sheath (10) according to any one of claims 1 to 4, **characterized in that** it comprises a portion (18) at the second end (14) which is folded into two loops (18a, 18b) angularly offset relative to each other, one of the loops (18b) that is offset comprising the movable arm (17).

6. A sheath (10) according to claim 5, **characterized in that** the portion (18) comprises a turn (18c) which connects the two loops (18a, 18b) to each other.

7. A sheath (10) according to any one of claims 1 to 6, **characterized in that** the body (11) is formed by a spring having contiguous turns.

8. A sheath (10) according to any one of claims 1 to 7, **characterized in that** it is formed by a single wire which comprises a part wound in contiguous turns forming the body (11) of the sheath (10), a portion at the first end (13) which blocks off at least in part a transverse section at the first end of the body (11), thereby forming the axial stop at the first end (13), and a portion at the second end (14) which is folded and comprises the movable arm (17).

9. A sheath (10) according to claim 8, **characterized in that** the wire comprises a round cross-section .

10. A sheath (10) according to any one of claims 1 to 6, **characterized in that** it is formed from strip material.
